# EUROPEAN PATENT SPECIFICATION

(11) **EP 2 522 698 B1**
(45) Date of publication and mention of the grant of the patent: **17.05.2017**
(21) Application number: 11731816.2
(22) Date of filing: 06.01.2011
(51) Int. Cl.: C08L 79/04, B32B 15/08, B32B 15/092, C08K 5/03, C08K 7/18, C08L 63/00, C08L 69/00, B32B 15/20, B32B 17/04, B32B 27/04, C08L 63/04, C08L 63/02, C08G 59/08, C08G 59/30, C08G 59/40, C08G 73/06, C08L 25/06, C08K 3/36, C08K 7/20, B32B 17/02

(54) **RESIN COMPOSITION, PREPREG, AND METAL-CLAD LAMINATE**
HARZZUSAMMENSETZUNG, PREPREG UND METALLKASCHIERTES LAMINAT
COMPOSITION DE RÉSINE, PRÉIMPRÉGNÉ, ET STRATIFIÉ REVÊTU DE MÉTAL

(30) Priority: 08.01.2010 JP 2010003362
(43) Date of publication of application: 14.11.2012
(73) Proprietor: Mitsubishi Gas Chemical Company, Inc., Tokyo 100-8324 (JP)
(72) Inventor: YAGINUMA, Michio, Tokyo 125-8601 (JP); TSUCHIDA, Takaki, Tokyo 125-8601 (JP); FUKASAWA, Emi, Tokyo 125-8601 (JP)
(74) Representative: Hoffmann Eitle
(86) International application number: PCT/JP2011/050096
(87) International publication number: WO 2011/083818

(56) References cited:
- EP-A1- 2 113 534
- WO-A1-2008/047866
- WO-A1-2008/087890
- JP-A- 3 037 264
- JP-A- 11 217 489
- JP-A- 2003 231 762
- JP-A- 2004 175 925
- JP-A- 2004 182 850
- JP-A- 2008 075 012
- "Römpp Online - Metalseifen", RÖMPP ONLINE, VERSION 3.37, August 2006 (2006-08), pages 1-2, XP002724434, Retrieved from the Internet: URL:http://www.roempp.com/prod3/roempp.php [retrieved on 2014-05-14]

## Description

### Technical Field

The present invention relates to a resin composition for printed wiring board materials, a prepreg using the composition, and a laminated sheet. More specifically, the present invention relates to a resin composition that can produce moldings with a good surface appearance, possesses excellent heat resistance after moisture absorption and dielectric characteristics, and is particularly suitable as multilayered printed wiring board materials in high-frequency applications.

### Background of the Invention

A recent requirement to information terminal equipment including personal computers and servers and communications equipment such as Internet routers and optical communication is high-speed processing of a large volume of data. To meet this requirement, an increase in speed and an increase in frequency of electric signals have been made. Due to this tendency, in order to meet the requirement for increased frequencies, lowered dielectric constants, lowered dielectric loss tangents, particularly lowered dielectric loss tangents, are required of laminated sheets for printed wiring boards used in these equipment. On the other hand, lead-free solders having high melting temperatures have become used from the viewpoint of environmental issues, and higher heat resistance is also required of laminated sheets for printed wiring boards.

Polyphenylene ether resins (for example, Japanese Patent Application Laid-Open No. 112981/2005) and cyanate ester resins (for example, Japanese Patent Application Laid-Open No. 120173/2005) have hitherto been used as laminated sheet materials for high-frequency applications. Polyphenylene ether resins, however, have a relatively large molecular weight and, thus, have a high melt viscosity. Accordingly, the polyphenylene ether resins have unsatisfactory flow properties during molding and thus have a large limitation particularly in multilayered boards, posing a problem from a practical viewpoint. Cyanate ester resins have a low melt viscosity and possess good moldability but are somewhat unsatisfactory in meeting low dielectric constant and low dielectric loss tangent requirements. Further, under lead-free solder environments where high-temperature treatment is carried out, materials having high heat resistance is required. Accordingly, an improvement in heat resistance has also been required of laminated sheets using cyanate ester resins.

On the other hand, silica has been added as an inorganic filler to resin compositions to simultaneously realize high heat resistance and low dielectric loss tangent (see, for example, Japanese Patent Application Laid-Open No. 75012/2008 and Japanese Patent Application Laid-Open No. 88400/2008). The addition of silica in an amount larger than a given amount to resin compositions has posed a problem that an uneven appearance of moldings occurs due to poor dispersion between the resin and the silica.

### PRIOR ART DOCUMENTS

### Patent Documents

Patent document 1: Japanese Patent Application Laid-Open No. 112981/2005
Patent document 2: Japanese Patent Application Laid-Open No. 120173/2005
Patent document 3: Japanese Patent Application Laid-Open No. 75012/2008
Patent document 4: Japanese Patent Application Laid-Open No. 88400/2008
JP2008075012 (A) discloses a resin composition comprises (a) a brominated epoxy resin, (b) a cyanic acid ester resin, (c) a low molecular weight polymer of styrene and/or a substituted styrene, (d) a brominated polycarbonate oligomer and (e) spherical silica, wherein the equivalent ratio of a cyanate group to an epoxy group in the resin composition is in the range of 2.5 to 4.5. EP2113534 (A1) discloses a vinyl-compound-based resin composition containing a terminal vinyl compound (a) of a bifunctional phenylene ether oligomer having a polyphenylene ether structure, a naphthol aralkyl type cyanate ester resin (b), a bisphenol A cyanate ester resin (c), a brominated flame retardant (d) and an inorganic filler (e),

### [SUMMARY OF THE INVENTION]

The present inventors have found that incorporating a resin composition comprising a cyanate ester resin, an epoxy resin, a specific thermoplastic resin, spherical silica particles, and a wetting and dispersing agent as indispensable components in a specific amount range (according to the appended claims) can provide metal foil-clad laminated sheets that possess a good surface appearance of moldings and excellent dielectric characteristics and heat resistance. The present invention has been made based on such finding.

Accordingly, an object of the present invention is to provide a cyanate ester resin composition for highly multilayered printed wiring boards for high-frequency applications that exhibits excellent heat resistance and dielectric characteristics and that can yield moldings with an excellent surface appearance, a prepreg prepared using the same, and a metal foil-clad laminated sheet.

According to one aspect of the present invention, there is provided a resin composition comprising: (a) a cyanate ester resin having two or more cyanate groups in the molecule; (b) a bisphenol A epoxy resin having two or more epoxy groups in the molecule; (c) a novolak epoxy resin having two or more epoxy groups in the molecule; (d) a brominated polycarbonate oligomer; (e) a low polymer of styrene and/or a substituted styrene; (f) spherical silica particles having a mean particle diameter of 3 µm or less; and (g) a wetting and dispersing agent, wherein the low polymer of styrene and/or substituted styrene (e) is an unbranched compound or resin obtained by polymerizing one of or two or more of aromatic vinyl compounds selected from styrene, vinyl toluene, α-methylstyrene and having a number average molecular weight of the polymer of 178 to 800, an average number of aromatic rings of 2 to 6, a total content of the aromatic rings of 2 to 6 of not less than 50% by weight, and a boiling point of 300°C or above, and the wetting and dispersing agent (g) being selected from modified polyurethanes.

In an embodiment of the present invention, preferably, the wetting and dispersing agent (g) is contained in an amount of 2 to 7% by weight based on the spherical silica particles (f) having a mean particle diameter of 3 µm or less.

Preferably, the spherical silica particles (f) having a mean particle diameter of 3 µm or less is contained in an amount of 25 to 65 parts by weight based on 100 parts by weight of a resin solid component in the resin composition.

In an embodiment of the present invention, preferably, the cyanate ester resin (a) is contained in an amount of 25 to 65 parts by weight based on 100 parts by weight of a resin solid component in the resin composition.

In an embodiment of the present invention, preferably, the bisphenol A epoxy resin (b) is contained in an amount of 5 to 40 parts by weight based on 100 parts by weight of a resin solid component in the resin composition.

In an embodiment of the present invention, preferably, the bisphenol A epoxy resin (b) comprises a brominated bisphenol A epoxy resin.

In an embodiment of the present invention, preferably, the novolak epoxy resin (c) is contained in an amount of 5 to 30 parts by weight based on 100 parts by weight of a resin solid component in the resin composition.

In an embodiment of the present invention, preferably, the brominated polycarbonate oligomer (d) is contained in an amount of 3 to 25 parts by weight based on 100 parts by weight of a resin solid component in the resin composition.

In an embodiment of the present invention, preferably, the low polymer of styrene and/or a substituted styrene (e) is contained in an amount of 3 to 20 parts by weight based on 100 parts by weight of a resin solid component in the resin composition.

According to another aspect of the present invention, there are provided a prepreg comprising: a base material; and the resin composition impregnated into or coated on the base material, and a metal foil-clad laminated sheet comprising a lamination-molded product of one prepreg or a stack of two or more prepregs and a metal foil provided on one surface or both surfaces of the prepreg or the stack.

Prepregs obtained from the resin composition according to the present invention and metal foil-clad laminated sheets obtained by curing the prepregs have excellent dielectric characteristics and heat resistance and possess an excellent appearance of moldings and, thus, are suitable for highly multilayered printed wiring board materials for high-frequency applications, leading to very high utility in industries.

### [DETAILED DESCRIPTION OF THE INVENTION]

The resin composition according to the present invention comprises as indispensable components (a) a cyanate ester resin having two or more cyanate groups in the molecule; (b) a bisphenol A epoxy resin having two or more epoxy groups in the molecule; (c) a novolak epoxy resin having two or more epoxy groups in the molecule; (d) a brominated polycarbonate oligomer; (e) a low polymer of styrene and/or a substituted styrene; (f) spherical silica particles having a mean particle diameter of 3 µm or less; and (g) a wetting and dispersing agent, wherein the low polymer of styrene and/or substituted styrene (e) is an unbranched compound or resin obtained by polymerizing one of or two or more of aromatic vinyl compounds selected from styrene, vinyl toluene, α-methylstyrene and having a number average molecular weight of the polymer of 178 to 800, an average number of aromatic rings of 2 to 6, a total content of the aromatic rings of 2 to 6 of not less than 50% by weight, and a boiling point of 300°C or above, and the wetting and dispersing agent (g) being selected from modified polyurethanes. The components constituting the resin composition will be described.

### <Cyanate ester resin (a)>

The cyanate ester resin (a) used in the present invention is not particularly limited as long as it is a compound that contains two or more cyanate groups per molecule. Specific examples thereof include 1,3-dicyanatobenzene, 1,3,5-tricyanatobenzene, bis(3,5-dimethyl-4-cyanatophenyl)methane, 1,3-, 1,4-, 1,6-, 1,8-, 2,6- or 2,7-dicyanatonaphthalene, 1,3,8-tricyanatonaphthalene, 4,4'-dicyanatobiphenyl, bis(4-cyanatophenyl)methane, 2,2-bis(4-cyanatophenyl)propane, 2,2-bis(3,5-dibromo-4-cyanatophenyl)propane, bis(4-cyanatophenyl)ether, bis(4-cyanatophenyl)thioether, bis(4-cyanatophenyl)sulfone, and cyanate ester resins obtained by reacting various novolak resins such as phenol novolak resins and naphthol novolak resins with brominated cyanogen. The cyanate ester resins may be used solely or in a combination of two or more of them. Preferred cyanate ester compounds (a) include 2,2-bis(4-cyanatophenyl)propane, bis(3,5-dimethyl-4-cyanatophenyl)methane, phenol novolak cyanate esters, and naphthol aralkyl novolak cyanate esters, and their prepolymers.

The content of the cyanate ester resin (a) in the resin composition is preferably in the range of 25 to 65 parts by weight, more preferably in the range of 35 to 50 parts by weight, based on 100 parts by weight of a resin solid component in the resin composition. When the content of the cyanate ester resins (a) is the lower limit or more, the glass transition temperature can be improved and, at the same time, electric characteristics can be improved, that is, dielectric loss tangent can be lowered. When the content of the cyanate ester resins (a) is the upper limit or less, a deterioration in properties of materials after moisture absorption, particularly a deterioration in hygroscopic heat resistance, can be suppressed. Here the expression " resin solid component in the resin composition" means a component that constitutes the composition and is other than the spherical silica particles, the wetting and dispersing agent, and the solvent from the resin composition. The " resin solid component in the resin composition" refers to this component.

### <Bisphenol A epoxy resin (b)>

The bisphenol A epoxy resin (b) used in the present invention is not particularly limited as long as it is a bisphenol A epoxy resin that contains two or more epoxy groups per molecule. In the present invention, preferably, a brominated bisphenol A epoxy resin is contained as the bisphenol A epoxy resin (b).

The content of the bisphenol A epoxy resin (b) in the resin composition is preferably in the range of 5 to 40 parts by weight, more preferably 10 to 30 parts by weight, based on 100 parts by weight of a resin solid component in the resin composition. When the content of the bisphenol A epoxy resin (b) is the lower limit or more, the electric characteristics can be improved, that is, dielectric loss tangent can be lowered. When the content of the bisphenol A epoxy resin (b) is the upper limit or less, properties of materials after moisture absorption, particularly hygroscopic heat resistance, can be improved.

### <Novolak epoxy resin (c)>

The novolak epoxy resin (c) used in the present invention is not particularly limited as long as it is a novolak epoxy resin that contains two or more epoxy groups per molecule. Specific examples thereof include phenol novolak epoxy resins, brominated phenol novolak epoxy resins, cresol novolak epoxy resins, bisphenol A novolak epoxy resins, phenol aralkyl novolak epoxy resins, biphenyl aralkyl novolak epoxy resins, naphthol aralkyl novolak epoxy resins, phosphorus-containing novolak epoxy resins, cyclopentadiene epoxy resins, and isocyanate-modified epoxy resins. Among them, phenol novolak epoxy resins, brominated phenol novolak epoxy resins, and cresol novolak epoxy resins are preferred. The novolak epoxy resins may be used solely or in a combination of two or more of them.

The content of the novolak epoxy resin (c) in the resin composition is preferably in the range of 5 to 30 parts by weight, more preferably 10 to 20 parts by weight, based on 100 parts by weight of a resin solid component in the resin composition. When the content of the novolak epoxy resin (c) is the lower limit or more, properties of materials after moisture absorption, particularly hygroscopic heat resistance, can be improved. When content of the novolak epoxy resin (c) is the upper limit or less, the electric characteristics can be improved, that is, the dielectric loss tangent can be lowered.

The resin composition according to the present invention may contain epoxy resins other than the epoxy resins (b) and (c). Specific examples of such epoxy resins include bisphenol F epoxy resins, trisphenol methane epoxy resins, polyfunctional phenol epoxy resins, naphthalene epoxy resins, and bisphenyl epoxy resins. The epoxy resins may be used solely or in a combination of two or more of them.

### <Brominated polycarbonate oligomer (d)>

The brominated polycarbonate oligomer (d) used in the present invention is not particularly limited as long as it is a bromine atom-containing oligomer having a polycarbonate structure. In the present invention, however, the molecular weight of the brominated polycarbonate oligomer (d) is not particularly limited but is preferably 500 to 3000 in terms of weight average molecular weight.

The content of the brominated polycarbonate oligomer (d) in the resin composition is not particularly limited but is preferably in the range of 3 to 25 parts by weight, more preferably in the range of 5 to 20 parts by weight, based on 100 parts by weight of a resin solid component in the resin composition. When the content of the brominated polycarbonate oligomer (d) is above the lower limit the dielectric constant and the dielectric loss tangent can be lowered. When the content of the brominated polycarbonate oligomer (d) is below the upper limit, a lowering in heat resistance can be suppressed.

### <Low polymer of styrene and/or substituted styrene (e)>

The low polymer of styrene and/or substituted styrene (e) used in the present invention is an unbranched compound or resin that is obtained by polymerizing one of or two or more of aromatic vinyl compounds selected from styrene, vinyl toluene, α-methylstyrene and the like and has a number average molecular weight of the polymer of 178 to 800, an average number of aromatic rings of 2 to 6, a total content of the aromatic rings of 2 to 6 of not less than 50% by weight, and a boiling point of 300°C or above.

The content of the low polymer of styrene and/or substituted styrene (e) in the resin composition is not particularly limited but is preferably in the range of 3 to 20 parts by weight, more preferably in the range of 5 to 15 parts by weight, based on 100 parts by weight of a resin solid component in the resin composition. When the content of the low polymer (e) is above the lower limit, the dielectric constant and the dielectric loss tangent can be lowered. When the content of the low polymer (e) is the upper limit or less, properties of materials after moisture absorption, particularly hygroscopic heat resistance, can be improved.

### <Spherical silica particles (f)>

Spherical fused silica particles and spherical synthetic silica particles may be mentioned as the spherical silica particles (f) used in the present invention. The spherical silica particles may be used solely or in a combination of two or more of them. The mean particle diameter of the spherical silica particles (f) is not more than 3 µm. Spherical silica particles (f) having a mean particle diameter of 0.1 to 1 µm are more suitable.

The content of the spherical silica particles (f) in the resin composition is not particularly limited but is preferably in the range of 25 to 65 parts by weight, more preferably in the range of 35 to 50 parts by weight, based on 100 parts by weight of a resin solid component in the resin composition. When the content of the spherical silica particles (f) is the lower limit or more, the electric characteristics can be improved, that is, the dielectric loss tangent can be lowered. When the content of the spherical silica particles (f) is the upper limit or less, the resin composition has good drilling workability and flow properties in molding. When the mean particle diameter of the spherical silica particles is more than 3 µm or when the content of the spherical silica particles is above the upper limit of the above-defined range, the resin composition suffers from problems such as breakage of small-diameter drill bits in use or a deterioration in flow properties in molding. When the content of the spherical silica particles is below the lower limit of the above-defined range, the electric characteristics are deteriorated, that is, the dielectric loss tangent can be increased.

The spherical silica particles used in the present invention may have been surface-treated. Any surface treatment may be applied as long as the treatment is commonly used in laminated sheet applications. Examples thereof include epoxy silane treatment and aminosilane treatment.

### <Wetting and dispersing agent (g)>

The wetting and dispersing agent (g) used in the present invention is selected from modified polyurethanes. The wetting and dispersing agent may be used solely or in a combination of two or more of them. The high-molecular weight copolymers based on a urethane structure have a number of groups having affinity for pigments that can be adsorbed on the surface of fillers to prevent aggregation among fillers and wetting and dispersing agents can be entangled with each other to prevent settling of fillers. Commercially available wetting and dispersing agents may be used, and examples thereof include Disperbyk-161, and 184 manufactured by Bik-Chemie Japan K.K. The wetting and dispersing agent as mentioned above may be used solely or in a combination of two or more of them.

The content of the wetting and dispersing agent (g) in the resin composition is preferably 2 to 7% by weight of the content of the spherical silica particles (f) contained in the resin composition. When the content of the wetting and dispersing agent (g) is the lower limit or more, the dispersion of the spherical silica particles and the resin in the resin composition can be enhanced, contributing to the suppression of uneven molding. When the content of the wetting and dispersing agent (g) is the upper limit or less, a lowering in heat resistance can be suppressed.

### <Other ingredients>

If necessary, a curing accelerator may be added to the resin composition of the present invention. The curing accelerator is not particularly limited as long as it is publicly known and commonly used. Typical examples thereof include organic metal salts of copper, zinc, cobalt, nickel and the like, imidazoles and derivatives thereof, and tertiary amines. More specifically, zinc octylate and the like may be used.

### <Process for producing resin composition>

The resin composition according to the present invention may be produced by mixing the above ingredients together. Conventional publicly known methods may be adopted. The resin composition may be produced, for example, by successively adding a cyanate ester resin (a), a bisphenol A epoxy resin (b), a novolak epoxy resin (c), a brominated polycarbonate oligomer (d), a low polymer of styrene and/or substituted styrene (e), spherical silica particles having a mean particle diameter of not more than 3 µm (f), and a wetting and dispersing agent (g) to a solvent and thoroughly stirring the mixture.

The solvent used in the production of the resin composition is not particularly limited as long as it can dissolve a mixture of the cyanate ester resin (a), the bisphenol A epoxy resin (b), and the novolak epoxy resin (c). Specific examples thereof include acetone, methyl ethyl ketone, methylcellosolve, propylene glycol methyl ether and acetates thereof, toluene, xylene, and dimethylformamide. The solvent may be used solely or in a combination of two or more of them.

### <Prepreg>

The prepreg according to the present invention comprises a base material and the resin composition impregnated into or coated on the base material. Well known base materials used in various materials for printing wiring boards may be used as the base material. Examples thereof include inorganic fibers such as E-glass, D-glass, S-glass, T-glass, and NE-glass and organic fibers such as polyimides, polyamides, and polyesters. The base material, however, is not limited to them and may be properly selected depending upon contemplated applications and properties.

The base material may be, for example, in a woven or nonwoven fabric. The thickness of the base material is not particularly limited but is generally approximately 0.02 to 0.2 mm. Base materials that have been subjected to surface treatment with silane coupling agents or the like or subjected to physical opening treatment are preferred from the viewpoint of hygroscopic heat resistance.

A production method of the prepreg according to the present invention is not particularly limited as long as the prepreg can be obtained by a combination of the resin composition comprising the cyanate ester resin (a), the bisphenol A epoxy resin (b), the novolak epoxy resin (c), the brominated polycarbonate oligomer (d), the low polymer of styrene and/or substituted styrene (e), the spherical silica particles having a mean particle diameter of not more than 3 µm, and the wetting and dispersing agent (g) with the base material. For example, the prepreg may be produced by impregnating the resin composition into the base material or coating the resin composition on the base material and then heating the impregnated or coated base material to semi-cure the resin to B stage. The semi-curing to the B-stage may be carried out, for example, by heating the resin composition impregnated into or coated on the base material in a drier at 100 to 200°C for 1 to 30 min. The amount of the resin composition (including spherical silica particles) in the prepreg is preferably in the range of 30 to 90% by weight based on the base material.

### <Metal foil-clad laminated sheet>

The metal foil-clad laminated sheet according to the present invention is obtained by lamination molding using the prepreg. Specifically, one prepreg or a stack of two or more prepregs is provided, and a metal foil such as copper or aluminum is disposed on one surface or both surfaces of the prepreg or the stack depending upon contemplated purposes, followed by lamination molding. The metal foil used is not particularly limited as long as it is usable in printed wiring board materials. Preferred are publicly known copper foils such as rolled copper foils and electrolytic copper foils. The thickness of the metal foil is preferably 3 to 70 µm, more preferably 5 to 18 µm.

Conditions used for the production of conventional laminated sheets and multilayered laminated sheets for printed wiring boards are applicable as conditions for the lamination molding. Common conditions are, for example, use of a multistage press, a multistage vacuum press, continuous molding, or an autoclave molding machine, a temperature of 150 to 300°C, a pressure of 2 to 100 kgf/cm², and a heating time of 0.05 to 5 hr. The formation of a laminated sheet by lamination molding using a combination of the prepreg with a separately prepared inner layer writing board is also possible.

### [EXAMPLES]

The present invention is further illustrated by the following Examples and Comparative Examples. However, the present invention is not to be construed as being limited to these Examples.

### <Preparation of double-sided copper-clad laminated sheets>

### Example 1

A prepolymer of 2,2-bis(4-cyanatophenyl)propane (CA210, manufacured by Mitsubishi Gas Chemical Co., Inc.) (40 parts by weight), 14 parts by weight of a brominated bisphenol A epoxy resin (Epiclon153, manufactured by DIC), 15 parts by weight of a brominated bisphenol A epoxy resin (DER515, manufactured by Dow Chemical Japan Ltd.), 12 parts by weight of a cresol novolak epoxy resin (N680, manufactured by DIC), 9 parts by weight of a brominated polycarbonate oligomer (FG8500, weight average molecular weight 3000, Br content 58%, manufactured by Teijin Chemicals Ltd.), 10 parts by weight of a low-molecular weight polystyrene (PICCOLASTIC A-5, manufactured by U.S. Eastman Chemical Company), 55 parts by weight of spherical synthetic silica particles (SC2050, mean particle diameter 0.5 µm, manufactured by Admatex), 1.5 parts by weight of a wetting and dispersing agent (Disperbyk-161, manufactured by Bik-Chemie Japan K.K.), and 0.02 part by weight of zinc octylate were mixed with stirring to obtain a varnish.

The varnish thus obtained was diluted with methyl ethyl ketone, and a 0.08 mm-thick E-glass cloth was impregnated with the diluted varnish. The impregnated E-glass cloth was heated at 160°C for 8 min to obtain a prepreg having a resin composition content of 54% by weight. Next, 8 sheets of this prepreg were superimposed on top of one another, and a 18-µm electrolytic copper foil was disposed on the upper and lower surfaces of the stack, followed by pressing under conditions of a temperature of 200°C, a contact pressure of 30 kgf/cm², and a pressing time of 160 min to obtain a 0.8 mm-thick double-sided copper-clad laminated sheet.

### Example 2

A prepolymer of 2,2-bis(4-cyanatophenyl)propane (CA210) (45 parts by weight), 16 parts by weight of a brominated bisphenol A epoxy resin (Epiclon153), 8 parts by weight of a brominated bisphenol A epoxy resin (DER515), 15 parts by weight of a cresol novolak epoxy resin (N680), 9 parts by weight of a brominated polycarbonate oligomer (FG8500), 7 parts by weight of an α-methylstyrene oligomer (Crystalex 3085, weight average molecular weight: 664, manufactured by U.S. Eastman Chemical Company), 45 parts by weight of spherical synthetic silica particles (SC2050), 1 part by weight of a wetting and dispersing agent (Disperbyk-184, manufactured by Bik-Chemie Japan K.K.), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Example 3

A varnish was prepared in the same manner as in Example 2, except that, in the preparation of the varnish, Disperbyk-161 (manufactured by Bik-Chemie Japan K.K.) was used instead of Disperbyk-184. A 0.8 mm-thick double-sided copper-clad laminated sheet was obtained in the same manner as in Example 2, except that the varnish prepared just above was used.

### Example 4

A varnish was prepared in the same manner as in Example 3, except that the mixing amount of the wetting and dispersing agent was changed from 1 to 3 parts by weight. A 0.8 mm-thick double-sided copper-clad laminatedsheet was obtained in the same manner as in Example 3, except that the varnish prepared just above was used.

### Reference Example 5

A varnish was prepared in the same manner as in Example 2, except that 2 parts by weight of Disperbyk-116 (manufactured by Bik-Chemie Japan K.K.) was used as the wetting and dispersing agent instead of 1 part by weight of Disperbyk-184. A 0.8 mm-thick double-sided copper-clad laminated sheet was obtained in the same manner as in Example 2, except that the varnish prepared just above was used.

### Example 6

A prepolymer of 2,2-bis(4-cyanatophenyl)propane (CA210) (50 parts by weight), 10 parts by weight of a brominated bisphenol A epoxy resin (Epiclon153), 5 parts by weight of a bisphenol A epoxy resin (Epikote 828EL, manufactured by Japan Epoxy Resins Co., Ltd.), 15 parts by weight of a brominated phenol novolak epoxy resin (BREN-S, manufactured by Nippon Kayaku Co., Ltd.), 10 parts by weight of a brominated polycarbonate oligomer (FG8500), 10 parts by weight of a low-molecular weight polystyrene (PICCOLASTIC A-5), 25 parts by weight of spherical fused silica particles (FB-3SDC, mean particle diameter 3 µm, manufactured by Denki Kagaku Kogyo K.K.), 0.5 part by weight of a wetting and dispersing agent (Disperbyk-161), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Example 7

A prepolymer of 2,2-bis(4-cyanatophenyl)propane (CA210) (35 parts by weight), 5 parts by weight of a brominated bisphenol A epoxy resin (Epiclon153), 5 parts by weight of a brominated bisphenol A epoxy resin (DER515), 25 parts by weight of a cresol novolak epoxy resin (N680), 20 parts by weight of a brominated polycarbonate oligomer (FG8500), 10 parts by weight of an α-methylstyrene oligomer (Crystalex 3085), 60 parts by weight of spherical synthetic silica particles (SC2050), 2 parts by weight of a wetting and dispersing agent (Disperbyk-161), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Example 8

A prepolymer of 2,2-bis(4-cyanatophenyl)propane (CA210) (50 parts by weight), 17 parts by weight of a brominated bisphenol A epoxy resin (Epiclon153), 8 parts by weight of a bisphenol A epoxy resin (Epikote 828EL), 10 parts by weight of a brominated phenol novolak epoxy resin (BREN-S), 5 parts by weight of a brominated polycarbonate oligomer (FG8500), 15 parts by weight of a low-molecular weight polystyrene (PICCOLASTIC A-5), 45 parts by weight of spherical synthetic silica particles (SC2050), 1 part by weight of a wetting and dispersing agent (Disperbyk-184), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 1

A prepolymer of 2,2-bis(4-cyanatophenyl)propane (CA210) (40 parts by weight), 14 parts by weight of a brominated bisphenol A epoxy resin (Epiclon 153), 15 parts by weight of a brominated bisphenol A epoxy resin (DER515), 12 parts by weight of a cresol novolak epoxy resin (N680), 9 parts by weight of a brominated polycarbonate oligomer (FG8500), 10 parts by weight of an α-methylstyrene oligomer (Crystalex 3085), 55 parts by weight of spherical synthetic silica particles (SC2050), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 2

A prepolymer of 2,2-bis(4-cyanatophenyl)propane (CA210) (50 parts by weight), 20 parts by weight of a brominated bisphenol A epoxy resin (Epiclon153), 10 parts by weight of a bisphenol A epoxy resin (Epikote828EL), 10 parts by weight of a brominated polycarbonate oligomer (FG8500), 10 parts by weight of a low-molecular weight polystyrene (PICCOLASTIC A-5), 60 parts by weight of spherical synthetic silica particles (SC2050), 2 parts by weight of a wetting and dispersing agent (Disperbyk-161), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 3

A prepolymer of 2,2-bis(4-cyanatophenyl)propane (CA210) (37 parts by weight), 25 parts by weight of a brominated phenol novolak epoxy resin (BREN-S), 23 parts by weight of a cresol novolak epoxy resin (N680), 10 parts by weight of a brominated polycarbonate oligomer (FG8500), 5 parts by weight of an α-methylstyrene oligomer (Crystalex 3085), 50 parts by weight of spherical silica particles (FB-3SDC), 1 part of a wetting and dispersing agent (Disperbyk-184), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 4

A prepolymer of 2,2-bis(4-cyanatophenyl)propane (CA210) (50 parts by weight), 17 parts by weight of a brominated bisphenol A epoxy resin (Epiclon153), 5 parts by weight of a bisphenol A epoxy resin (Epikote 828EL), 8 parts by weight of a brominated phenol novolak epoxy resin (BREN-S), 10 parts by weight of a brominated polycarbonate oligomer (FG8500), 10 parts by weight of a low-molecular weight polystyrene (PICCOLASTIC A-5), 0.5 part by weight of a wetting and dispersing agent (Disperbyk-161), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 5

A prepolymer of 2,2-bis(4-cyanatophenyl)propane (CA210) (40 parts by weight), 8 parts by weight of a brominated bisphenol A epoxy resin (Epiclon153), 22 parts by weight of a brominated bisphenol A epoxy resin (DER515), 15 parts by weight of a cresol novolak epoxy resin (N680), 10 parts by weight of a brominated polycarbonate oligomer (FG8500), 5 parts by weight of a low-molecular weight polystyrene (PICCOLASTIC A-5), 80 parts by weight of a crushed silica having a particle diameter of 4.9 µm (FS-20, manufactured by Denki Kagaku Kogyo K.K.), 2 parts by weight of a wetting and dispersing agent (Disperbyk-161), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 6

A prepolymer of 2,2-bis(4-cyanatophenyl)propane (CA210) (45 parts by weight), 15 parts by weight of a brominated bisphenol A epoxy resin (Epiclon153), 17 parts by weight of a brominated bisphenol A epoxy resin (DER515), 8 parts by weight of a brominated phenol novolak epoxy resin (BREN-S), 15 parts by weight of an α-methylstyrene oligomer (Crystalex 3085), 40 parts by weight of spherical fused silica particles (SC2050), 1 part by weight of a wetting and dispersing agent (Disperbyk-184), and 0.02 part by weight of zinc octylate were mixed with stirring to obtain a varnish. A 0.8 mm-thick double-sided copper-clad laminated sheet was obtained in the same manner as in Example 1, except that the varnish prepared just above was used.

### Comparative Example 7

A prepolymer of 2,2-bis(4-cyanatophenyl)propane (CA210) (30 parts by weight), 8 parts by weight of a brominated bisphenol A epoxy resin (Epiclon153), 15 parts by weight of a bisphenol A epoxy resin (Epikote828EL), 12 parts by weight of a cresol novolak epoxy resin (N680), 35 parts by weight of a brominated polycarbonate oligomer (FG8500), 55 parts by weight of spherical fused silica particles (SC2050), 1 part by weight of a wetting and dispersing agent (Disperbyk-161), and 0.02 part by weight of zinc octylate were mixed with stirring to obtain a varnish. A 0.8 mm-thick double-sided copper-clad laminate was obtained in the same manner as in Example 1, except that the varnish prepared just above was used.

### Comparative Example 8

A varnish was prepared in the same manner as in Example 3, except that the mixing amount of the wetting and dispersing agent was changed from 1 to 4 parts by weight. A 0.8 mm-thick double-sided copper-clad laminated sheet was obtained in the same manner as in Example 3, except that the varnish prepared just above was used.

### Comparative Example 9

A varnish was prepared in the same manner as in Example 3, except that the mixing amount of the wetting and dispersing agent was changed from 1 to 5 parts by weight. A 0.8 mm-thick double-sided copper-clad laminated sheet was obtained in the same manner as in Example 3, except that the varnish prepared just above was used.

### <Evaluation>

### (1) Glass transition temperature

The glass transition temperature of the resins thus obtained were measured by a DMA method according to JIS C 6481 (n = 2).

### (2) Dielectric characteristics

The copper foil in the 0.8 mm-thick copper-clad laminate was removed by etching, and the copper-clad laminated sheet with the copper foil removed therefrom was cut into a size of 110 × 1.0 mm. The dielectric characteristics of the sample were measured at 1 GHz by a cavity resonance method [NETWORK ANALAYZER 8722ES, manufactured by Agilent] (n = 6). It is generally regarded that products having a dielectric loss tangent of not more than 0.0065 are acceptable while products having a dielectric loss tangent of more than 0.0065 are unacceptable.

### (3) T-288 (Time to delamination)

T-288 was measured according to IPC TM-650 as follows. A 18 µm-thick copper foil-clad test piece (5 mm × 5 mm × 0.8 mm) was provided. The following procedure was carried out with a TMA apparatus (EXSTAR6000TMA/SS6100, manufactured by an SII NanoTechnology Inc.). The test piece was heated to 288°C at a temperature rise rate of 10°C /min. After the temperature reached 288°C, the temperature was kept 288°C. In this state, a time period from the time where the temperature reached 288°C to the time where delamiantion occurred (n = 2) was measured. It is generally regarded that, when the delamiantion time is not less than 10 min, products are acceptable while, when the delamiantion time is less than 10 min, products are unacceptable (NG).

### (4) Hygroscopic heat resistance

A test piece from which the copper foil in an area of not more than the half of the area of one surface of a sample having a size of 60 mm × 60 mm had been removed by etching was provided and treated with a pressure cooker testing machine (PC-3 type, manufactured by Hirayama Manufacturing Corporation) under conditions of a temperature of 121 °C, an atmospheric pressure of 2 atm, and a treatment time of 3 hr, and was immersed in a solder of 260°C for 30 sec. The test piece was then visually inspected for an appearance change. The same test was repeated (n = 4), and the hygroscopic heat resistance was evaluated based on the proportion of the number of tests in which blistering occurred, that is, number of tests in which blistering occurred/the number of tests.

### (5) Breakage of drill

A 12 µm-thick copper foil was disposed on both surfaces of a stack of 8 prepregs formed of a 0.1 mm-thick E-glass cloth and having a resin content of 54% by weight to prepare a 0.8 mm-thick copper-clad laminated sheet. One sheet of this test piece (510 mm × 340 mm × 0.8 mm) was provided, and an entry sheet (LE800, thickness 0.070 mm, manufactured by Mitsubishi Gas Chemical Company, Inc.) was placed on this test piece. 5,000 holes were formed with an NC drill machine (H-MARK-20V, manufactured by Hitachi Via Mechanics, Ltd.) at pitches of 0.2 mm under conditions of a drill bit (MD J492B, 0.105 × 1.6 mm, manufactured by UNION TOOL CO.), a rotating speed of 160 krpm, and a feed speed of 1.2 m/min. The test piece was evaluated as acceptable (○) when no drill breakage occurred in the 5000-hole formation while the test piece was evaluated as unacceptable (×) when breakage of the drill occurred in the 5000-hole formation.

### (6) Uneven molding

After etching of the copper foil in the laminated sheet, the laminated sheet was visually inspected for uneven molding (flow streaks). The laminate was evaluated as acceptable (○) when uneven molding was not observed while the laminated was evaluated as unacceptable (×) when uneven molding was observed (n = 3).

The results of evaluation of evaluation items (1) to (6) were as shown in Tables 1 and 2.

[Table 1]

**Table 1**

| Resin composition | | Example | | | | | | | |
|---|---|---|---|---|---|---|---|---|---|
| | | 1 | 2 | 3 | 4 | 5* | 6 | 7 | 8 |
| Cyanate ester (a) | CA210 | 40 | 45 | 45 | 45 | 45 | 50 | 35 | 50 |
| Bisphenol A epoxy resin (b) | Epiclon153 | 14 | 16 | 16 | 16 | 16 | 10 | 5 | 17 |
| | DER515 | 15 | 8 | 8 | 8 | 8 | - | 5 | |
| | 828EL | - | - | - | - | - | 5 | - | 8 |
| Novolak epoxy resin (c) | N680 | 12 | 15 | 15 | 15 | 15 | - | 25 | - |
| | BREN-S | - | - | - | - | - | 15 | - | 10 |
| Brominated polycarbonate oligomer (d) | FG8500 | 9 | 9 | 9 | 9 | 9 | 10 | 20 | 5 |
| Low polymer (e) | A-5 | 10 | - | - | - | - | 10 | - | 15 |
| | KA3085 | - | 7 | 7 | 7 | 7 | - | 10 | - |
| Silica (f) | SC2050 | 55 | 45 | 45 | 45 | 45 | - | 60 | 45 |
| | FB-3SDC | - | - | - | - | - | 25 | - | - |
| | FS-20 | - | - | - | - | - | - | - | - |
| Wetting/dispersing agent (g) | Disperbyk-161 | 1.5 | - | 1 | 3 | - | 0.5 | 2 | - |
| | Disperbyk-184 | - | 1 | - | - | - | - | - | 1 |
| | Disperbyk-116 | - | - | - | - | 2 | - | - | - |
| Curing accelerator | Zinc octylate | 0.02 | 0.02 | 0.02 | 0.02 | 0.02 | 0.02 | 0.02 | 0.02 |
| Total (a+b+c+d+e) | | 155 | 145 | 145 | 145 | 145 | 125 | 160 | 150 |
| Evacuation | Glass transition temp. (°C) | 230 | 230 | 230 | 220 | 225 | 240 | 215 | 235 |
| | Dielectric loss tangent | 0.0055 | 0.0060 | 0.0060 | 0.0065 | 0.0065 | 0.0055 | 0.0065 | 0.0050 |
| | T-288 (min) | >10 | >10 | >10 | >10 | >10 | >10 | >10 | >10 |
| | Moisture absorption/heat resistance | 0/4 | 0/4 | 0/4 | 0/4 | 0/4 | 0/4 | 0/4 | 0/4 |
| | Breakage of drill | ○ | ○ | ○ | ○ | ○ | ○ | ○ | ○ |
| | Uneven molding | ○ | ○ | ○ | ○ | × | ○ | ○ | ○ |

| | | | | | | | | | |
|---|---|---|---|---|---|---|---|---|---|
| *Reference Example | | | | | | | | | |

[Table 2]

**Table 2**

| Resin composition | | Comparative Example | | | | | | | | |
|---|---|---|---|---|---|---|---|---|---|---|
| | | 1 | 2 | 3 | 4 | 5 | 6 | 7 | 8 | 9 |
| Cyanate ester (a) | CA210 | 40 | 50 | 37 | 50 | 40 | 45 | 30 | 45 | 45 |
| Bisphenol A epoxy resin (b) | Epiclon153 | 14 | 20 | - | 17 | 8 | 15 | 8 | 16 | 16 |
| | DER515 | 15 | - | - | - | 22 | 17 | - | 8 | 8 |
| | 828EL | - | 10 | - | 5 | - | - | 15 | | |
| Novolak epoxy resin (c) | N680 | 12 | - | 23 | - | 15 | - | 12 | 15 | 15 |
| | BREN-S | - | - | 25 | 8 | - | 8 | - | | |
| Brominated polycarbonate oligomer (d) | FG8500 | 9 | 10 | 10 | 10 | 10 | - | 35 | 9 | 9 |
| Low polymer (e) | A-5 | - | 10 | - | 10 | 5 | - | - | | |
| | KA3085 | 10 | - | 5 | - | - | 15 | - | 7 | 7 |
| Silica (f) | SC2050 | 55 | 60 | - | - | - | - | 55 | 45 | 45 |
| | FB-3SDC | - | - | 50 | - | - | 40 | - | - | - |
| | FS-20 | - | - | - | - | 80 | - | - | - | - |
| Wetting/dispersing agent (g) | Disperbyk-161 | - | 2 | - | 0.5 | 2 | - | 1 | 4 | 5 |
| | Disperbyk-184 | - | - | 1 | - | - | 1 | - | - | - |
| | Disperbyk-116 | - | - | - | - | - | - | - | - | - |
| Curing accelerator | Zinc octylate | 0.02 | 0.01 | 0.02 | 0.02 | 0.02 | 0.02 | 0.02 | 0.02 | 0.02 |
| Total (a+b+c+d+e) | | 155 | 160 | 150 | 120 | 180 | 140 | 155 | 145 | 145 |
| Evaluation | Glass transition temp. (°C) | 230 | 240 | 215 | 230 | 220 | 230 | 205 | 215 | 205 |
| | Dielectric loss tangent | 0.0060 | 0.0050 | 0.0090 | 0.0055 | 0.0045 | 0.0070 | 0.0075 | 0.0068 | 0.0070 |
| | T-288 (min) | >10 | >10 | >10 | NG | >10 | >10 | NG | >10 | >10 |
| | Moisture absorption/heat resistance | 0/4 | 2/4 | 0/4 | 4/4 | 0/4 | 214 | 0/4 | 2/4 | 4/4 |
| | Breakage of drill | ○ | ○ | ○ | ○ | × | ○ | ○ | ○ | ○ |
| | Uneven molding | × | ○ | ○ | ○ | × | ○ | ○ | ○ | ○ |

As is also apparent from the results of evaluation shown in Tables 1 and 2, laminated sheets (Examples 1 to 4 and 6 to 10) formed using the cyanate ester resin (a), the bisphenol A epoxy resin (b), the novolak epoxy resin (c), the brominated polycarbonate oligomer (d), the low polymer of styrene and/or substituted styrene (e), the spherical silica particles having a mean particle diameter of not more than 3 µm (f), and the wetting and dispersing agent (g) are superior to the laminated sheets (Comparative Examples 1 to 7 and Reference Example 5) formed using resin compositions free from any one of or two or more of the components in heat resistance and dielectric characteristics, as well as in a surface appearance of moldings.

## Claims

1. A resin composition comprising:
(a) a cyanate ester resin having two or more cyanate groups in the molecule;
(b) a bisphenol A epoxy resin having two or more epoxy groups in the molecule;
(c) a novolak resin having two or more epoxy groups in the molecule;
(d) a brominated polycarbonate oligomer;
(e) a low polymer of styrene and/or a substituted styrene;
(f) spherical silica particles having a mean particle diameter of 3 µm or less; and
(g) a wetting and dispersing agent,
wherein the low polymer of styrene and/or substituted styrene (e) is an unbranched compound or resin obtained by polymerizing one of or two or more of aromatic vinyl compounds selected from styrene, vinyl toluene, α-methylstyrene and having a number average molecular weight of the polymer of 178 to 800, an average number of aromatic rings of 2 to 6, a total content of the aromatic rings of 2 to 6 of not less than 50% by weight, and a boiling point of 300°C or above, and
the wetting and dispersing agent (g) being selected from modified polyurethanes.

2. The resin composition according to claim 1, wherein the wetting and dispersing agent (g) is contained in an amount of 2 to 7% by weight based on the spherical silica particles (f) having a mean particle diameter of 3 µm or less.

3. The resin composition according to claim 1 or 2, wherein the spherical silica particles (f) having a mean particle diameter of 3 µm or less is contained in an amount of 25 to 65 parts by weight based on 100 parts by weight of a resin solid component in the resin composition.

4. The resin composition according to any one of claims 1 to 3, wherein the cyanate ester resin (a) is contained in an amount of 25 to 65 parts by weight based on 100 parts by weight of a resin solid component in the resin composition.

5. The resin composition according to any one of claims 1 to 4, wherein the bisphenol A epoxy resin (b) is contained in an amount of 5 to 40 parts by weight based on 100 parts by weight of a resin solid component in the resin composition.

6. The resin composition according to claim 5, wherein the bisphenol A epoxy resin (b) comprises a brominated bisphenol A epoxy resin.

7. The resin composition according to any one of claims 1 to 6, wherein the novolak epoxy resin (c) is contained in an amount of 5 to 30 parts by weight based on 100 parts by weight of a resin solid component in the resin composition.

8. The resin composition according to any one of claims 1 to 7, wherein the brominated polycarbonate oligomer (d) is contained in an amount of 3 to 25 parts by weight based on 100 parts by weight of a resin solid component in the resin composition.

9. The resin composition according to any one of claims 1 to 8, wherein the low polymer of styrene and/or a substituted styrene (e) is contained in an amount of 3 to 20 parts by weight based on 100 parts by weight of a resin solid component in the resin composition.

10. A prepreg comprising: a base material; and a resin composition according to any one of claims 1 to 9 impregnated into or coated on the base material.

11. A metal foil-clad laminated sheet comprising a lamination-molded product of one prepreg or a stack of two or more prepregs according to claim 10 and a metal foil provided on one surface or both surfaces of the prepreg or the stack.

## Patentansprüche

1. Harzzusammensetzung, umfassend:
(a) ein Cyanatesterharz mit zwei oder mehr Cyanatgruppen im Molekül;
(b) ein Bisphenol-A-Epoxidharz mit zwei oder mehr Epoxidgruppen im Molekül;
(c) ein Novolakharz mit zwei oder mehr Epoxidgruppen im Molekül;
(d) ein bromiertes Polycarbonatoligomer;
(e) ein niederes Polymer aus Styrol und/oder einem substituierten Styrol;
(f) kugelförmige Siliciumdioxidteilchen mit einem mittleren Teilchendurchmesser von 3 µm oder weniger; und
(g) ein Benetzungs- und Dispersionsmittel,
wobei das niedere Polymer aus Styrol und/oder substituiertem Styrol (e) eine unverzweigte Verbindung oder ein unverzweigtes Harz ist, das durch Polymerisation von einer oder zwei oder mehr aromatischen Vinylverbindungen, ausgewählt aus Styrol, Vinyltoluol, und α-Methylstyrol erhalten wird, und
wobei das Polymer ein zahlengemitteltes Molekulargewicht von 178 bis 800, eine durchschnittliche Anzahl aromatischer Ringe von 2 bis 6, einen Gesamtgehalt der 2 bis 6 aromatischen Ringe von nicht weniger als 50 Gew.-% und einen Siedepunkt von 300°C oder mehr aufweist, und
wobei das Benetzungs- und Dispersionsmittel (g) aus modifizierten Polyurethanen ausgewählt ist.

2. Harzzusammensetzung gemäß Anspruch 1, die das Benetzungs- und Dispersionsmittel (g) in einer Menge von 2 bis 7 Gew.-%, bezogen auf die kugelförmigen Siliciumdioxidteilchen (f) mit einem mittleren Teilchendurchmesser von 3 µm oder weniger, umfasst.

3. Harzzusammensetzung gemäß Anspruch 1 oder 2, welche die kugelförmigen Siliciumdioxidteilchen (f) mit einem mittleren Teilchendurchmesser von 3 *µ*m oder weniger in einer Menge von 25 bis 65 Gewichtsteilen, bezogen auf 100 Gewichtsteile der der Harzfeststoffkomponente in der Harzzusammensetzung, umfasst.

4. Harzzusammensetzung gemäß einem der Ansprüche 1 bis 3, die das Cyanatesterharz (a) in einer Menge von 25 bis 65 Gewichtsteilen, bezogen auf 100 Gewichtsteile der Harzfeststoffkomponente in der Harzzusammensetzung, umfasst.

5. Harzzusammensetzung gemäß einem der Ansprüche 1 bis 4, die das Bisphenol-A-Epoxidharz (b) in einer Menge von 5 bis 40 Gewichtsteilen, bezogen auf 100 Gewichtsteile der Harzfeststoffkomponente in der Harzzusammensetzung, umfasst.

6. Harzzusammensetzung gemäß Anspruch 5, wobei das Bisphenol-A-Epoxidharz (b) ein bromiertes Bisphenol-A-Epoxidharz umfasst.

7. Harzzusammensetzung gemäß einem der Ansprüche 1 bis 6, die das Novolak-Epoxidharz (c) in einer Menge von 5 bis 30 Gewichtsteilen, bezogen auf 100 Gewichtsteile der Harzfeststoffkomponente in der Harzzusammensetzung, umfasst.

8. Harzzusammensetzung gemäß einem der Ansprüche 1 bis 7, die das bromierte Polycarbonatoligomer (d) in einer Menge von 3 bis 25 Gewichtsteilen, bezogen auf 100 Gewichtsteile der Harzfeststoffkomponente in der Harzzusammensetzung, umfasst.

9. Harzzusammensetzung gemäß einem der Ansprüche 1 bis 8, die das niedere Polymer aus Styrol und/oder einem substituierten Styrol (e) in einer Menge von 3 bis 20 Gewichtsteilen, bezogen auf 100 Gewichtsteile der Harzfeststoffkomponente in der Harzzusammensetzung, umfasst.

10. Prepreg, umfassend: ein Basismaterial; und eine Harzzusammensetzung gemäß einem der Ansprüche 1 bis 9, mit der das Basismaterial imprägniert oder beschichtet ist.

11. Metallkaschiertes Laminat, umfassend ein durch Laminieren geformtes Produkt aus einem Prepreg oder einem Stapel von zwei oder mehreren Prepregs gemäß Anspruch 10 und einer Metallfolie, die auf einer Oberfläche oder beiden Oberflächen des Prepregs oder des Stapels aufgebracht ist.

## Revendications

1. Composition de résine comprenant :
(a) une résine d'ester de cyanate ayant deux groupes cyanate ou plus dans la molécule ;
(b) une résine époxy de bisphénol A ayant deux groupes époxy ou plus dans la molécule ;
(c) une résine novolaque ayant deux groupes époxy ou plus dans la molécule ;
(d) un oligomère de polycarbonate bromé ;
(e) un polymère de styrène bas et/ou un styrène substitué ;
(f) des particules de silice sphériques ayant un diamètre moyen de particule de 3 µm ou moins ; et
(g) un agent mouillant et dispersant,
dans laquelle le polymère de styrène bas et/ou le styrène substitué (e) est un composé ou une résine non ramifié(e) obtenu(e) par la polymérisation d'un ou de deux composés de vinyle aromatiques ou plus choisis parmi le styrène, le vinyltoluène, l'α-méthylstyrène et ayant une masse moléculaire moyenne en nombre du polymère de 178 à 800, un nombre moyen de cycles aromatiques allant de 2 à 6, une teneur totale en cycles aromatiques de 2 à 6 qui n'est pas inférieure à 50 % en poids, et un point d'ébullition de 300°C ou plus, et
l'agent mouillant et dispersant (g) étant choisi parmi des polyuréthanes modifiés.

2. Composition de résine selon la revendication 1, dans laquelle l'agent mouillant et dispersant (g) est contenu en une quantité de 2 à 7 % en poids sur la base des particules de silice sphériques (f) ayant un diamètre moyen de particule de 3 µm ou moins.

3. Composition de résine selon la revendication 1 ou 2, dans laquelle les particules sphériques de silice (f) ayant un diamètre moyen de particule de 3 µm ou moins sont contenues en une quantité de 25 à 65 parties en poids sur la base de 100 parties en poids d'un composant solide de résine dans la composition de résine.

4. Composition de résine selon l'une quelconque des revendications 1 à 3, dans laquelle la résine d'ester de cyanate (a) est contenue en une quantité de 25 à 65 parties en poids sur la base de 100 parties en poids d'un composant solide de résine dans la composition de résine.

5. Composition de résine selon l'une quelconque des revendications 1 à 4, dans laquelle la résine époxy de bisphénol A (b) est contenue en une quantité de 5 à 40 parties en poids sur la base de 100 parties en poids d'un composant solide de résine dans la composition de résine.

6. Composition de résine selon la revendication 5, dans laquelle la résine époxy de bisphénol A (b) comprend une résine époxy de bisphénol A bromé.

7. Composition de résine selon l'une quelconque des revendications 1 à 6, dans laquelle la résine époxy novolaque (c) est contenue en une quantité de 5 à 30 parties en poids sur la base de 100 parties en poids d'un composant solide de résine dans la composition de résine.

8. Composition de résine selon l'une quelconque des revendications 1 à 7, dans laquelle l'oligomère de polycarbonate bromé (d) est contenu en une quantité de 3 à 25 parties en poids sur la base de 100 parties en poids d'un composant solide de résine dans la composition de résine.

9. Composition de résine selon l'une quelconque des revendications 1 à 8, dans laquelle le polymère de styrène bas et/ou un styrène substitué (e) est contenu en une quantité de 3 à 20 parties en poids sur la base de 100 parties en poids d'un composant solide de résine dans la composition de résine.

10. Préimprégné comprenant : un matériau de base ; et une composition de résine selon l'une quelconque des revendications 1 à 9 imprégnée dans ou revêtue sur le matériau de base.

11. Feuille stratifiée revêtue d'une feuille métallique comprenant un produit moulé par stratification constitué d'un préimprégné ou d'un empilement de deux préimprégnés ou plus selon la revendication 10 et d'une feuille métallique disposée sur une surface ou les deux surfaces du préimprégné ou de l'empilement.
